# EUROPÄISCHE PATENTSCHRIFT

(11) **EP 0 941 547 B1**
(45) Veröffentlichungstag und Bekanntmachung des Hinweises auf die Patenterteilung: **09.08.2000**
(21) Anmeldenummer: 97951086.4
(22) Anmeldetag: 22.11.1997
(51) Int. Cl.: H01H 3/16

(54) **STÖSSELSCHALTER, INSBESONDERE BREMSLICHTSCHALTER FÜR KRAFTFAHRZEUGE**
PLUNGER-OPERATED SWITCH, IN PARTICULAR BRAKE LIGHT SWITCH FOR MOTOR VEHICLES
CONTACTEUR A POUSSOIR, NOTAMMENT CONTACTEUR DES FEUX DE STOP D'UN VEHICULE A MOTEUR

(30) Priorität: 02.12.1996 DE 19649816
(43) Veröffentlichungstag der Anmeldung: 15.09.1999
(73) Patentinhaber: EATON CONTROLS GmbH & Co. KG, 55445 Langenlonsheim (DE)
(72) Erfinder: RUDOLPH, Gerd, D-55459 Aspisheim (DE); LEUSCHNER, Markus, D-55559 Bretzenheim (DE)
(74) Vertreter: Becker, Bernd, Dipl.-Ing.
(86) Internationale Anmeldenummer: DE9702744
(87) Internationale Veröffentlichungsnummer: WO9825283

(56) Entgegenhaltungen:
- DE-A- 3 439 695
- FR-A- 2 532 105

## Beschreibung

Die Erfindung betrifft einen Stößelschalter, insbesondere Bremslichtschalter für Kraftfahrzeuge, mit einem an einem Halteelement befestigbaren Gehäuse, in dem ein selbsttätig justierbarer, mit einer Klinkenverzahnung versehener Stößel geführt ist, einem federbelasteten Schlitten, der eine Klinkenverzahnung aufweist, die mit der des Stößels zusammenwirkt, und einem bei Betätigung des Stößels bewegbaren Schaltglied, welches mit einer Kontakteinheit eines elektrischen Schalters in Eingriff bringbar ist.

Aus der DE 32 30 414 C2 ist ein Stößelschalter mit einem innerhalb eines Gehäuses geführten und selbsttätig längeneinstellbaren Stößel bekannt, der über einen Teil seiner Länge mit einer Klinkenverzahnung versehen ist. Dieser Stößel wirkt mit einem federbeaufschlagten Schlitten zusammen, der ebenfalls mit einer Klinkenverzahnung versehen ist. Darüber hinaus ist eine Kontaktverbindung zwischen dem Schlitten und elektrischen Steckelementen vorgesehen. Eine der Klinkenverzahnungen ist im Innern des Stößels angeordnet, während die andere Klinkenverzahnung auf der Außenseite des Schlittens angebracht ist. Dieser Schalter kann sowohl direkt an einem hängendem oder stehenden Bremspedal als auch irgendwo an der Hebelübersetzung zum Bremspedal oder Bremszylinder angebracht werden. Der Schlitten kann in beiden Richtungen relativ zum Stößel bewegt werden. Damit läßt sich eine richtige Längeneinstellung des Stößels erreichen und zwar auch dann, wenn nach einer Nachjustierung des Stößels aufgrund der Abnutzung der Bremsbeläge und des damit vorliegenden größeren Schwenkweges des Bremspedals neue Bremsbacken eingebaut werden, die wiederum einen kleineren Schwenkweg des Bremspedals zur Folge haben. Beim Einbau des Stößelschalters bei betätigtem Bremspedal in eine gestellfest am Kraftfahrzeug befestigte Halteplatte wird der Stößel in Anlage mit dem Bremspedal gebracht. Hierbei erfolgt eine Selbstjustierung zwischen dem Stößel und dem Schlitten. Dies bewirkt eine Verbindung zwischen den elektrischen Kontakten, wodurch eine an die elektrischen Steckelemente angeschlossene Lampe aufleuchtet. Beim Loslassen des Bremspedals wird der Stößel gegen den federbelasteten Schlitten gedrückt, so daß die elektrische Verbindung zwischen den Kontakten getrennt wird.

Ein Nachteil dieser bekannten Lösung besteht darin, daß eine erforderliche Nachjustierung des Stößels nicht im an der Halteplatte montierten Zustand des Bremslichtschalters erfolgen kann, da die Klinkenverzahnungen des Stößels und des Schlittens nicht gegeneinander blockiert sind. Wenn beispielsweise das Bremspedal übermäßig entgegen seiner normalen Betätigungsrichtung bewegt wird, übt dieses eine erhöhte Druckkraft auf den Stößel des Bremslichtschalters aus, so daß die Klinkenverzahnungen des Stößels und des Schlittens gegeneinander verschoben werden und sich somit die Srellung des Stößels verändert. Dies ist z.B. dann der Fall, wenn vorübergehend eine Diebstahlsicherung eingebaut wird, die einerseits am Bremspedal und andererseits am Lenkrad eingehängt wird ("Doppelspazierstock"), wodurch das Bremspedal am Durchtreten gehindert wird. Hierbei wird oftmals die Justageweglänge des Stößels gegenüber dem Schlitten überschritten, was zur Beschädigung und zu einer Fehlfunktion des Bremslichtschalters führen kann. So ist es möglich, daß das Bremslicht bereits zugeschaltet wird, obwohl noch keine Bremswirkung erzeugt wurde.

Es ist Aufgabe der Erfindung, einen Stößelschalter, insbesondere Bremslichtschalter für Kraftfahrzeuge, der eingangs genannten Art zu schaffen, bei dem unter Beibehaltung der Selbstjustierung des Stößels im Stößelschalter während der Montage, die Verstellbarkeit des Stößels nach erfolgter Montage des Stößelschalters blockiert ist, wobei jedoch eine Nachjustierung des Stößels unter bestimmten Voraussetzungen auf einfache Weise ermöglicht werden soll.

Erfindungsgemäß wird die Aufgabe dadurch gelöst, daß
- ein im Gehäuse angeordneter Sockel zum Befestigen am Halteelement gegenüber dem Gehäuse verdrehbar ist,
- an der Klinkenverzahnung des Schlittens mehrere Ausnehmungen ausgebildet sind,
- ein am Gehäuse angeformtes Druckelement gegen die Klinkenverzahnung des Schlittens anlegbar ist und
- der federbelastete Schlitten gegen ein im Gehäuse geführtes, federbelastetes Aufnahmeteil abgestützt ist.

Während der Montage des Stößelschalters wird dieser bei nicht betätigtem Bremspedal in Anlage mit diesem gebracht, wobei unter Öffnung des Kontaktesder Stößelschalter in das gestellfest angebrachte Halteelement eingeführt wird, wodurch sich der Stößel aufgrund der Klinkenverzahnungen am Stößel und am Schlitten selbsttätig in seiner Längeneinstellung justiert. Durch das Verdrehen des Sockels gegenüber dem Gehäuse des Stößelschalters wird einerseits der Stößelschalter am Halteelement fest arretiert und andererseits mittels dem am Gehäuse angeformten Druckelement die Klinkenverzahnungen des Stößels und des Schlittens gegeneinander gepreßt. Dadurch wird eine Dejustierung des Stößels relativ zum Schlitten verhindert. Wird das Bremspedal einer Überlast ausgesetzt, indem dieses übermäßig entgegen seiner normalen Betätigungsrichtung bewegt wird, wie dies bei Anbringung einer Diebstahlsicherung häufig der Fall ist, wird durch das gegenüber dem Gehäuse abgestützte federbelastete Aufnahmeteil ein Überhub zur Verfügung gestellt. Bei einer solchen, auf das Bremspedal einwirkenden Überlast wird der federbelastete Schlitten derart gegen das Aufnahmeteil gedrückt, daß sich dieses entgegen der anliegenden Federkraft bewegt. Hierbei ist ein Überhubweg von etwa 7 mm ausreichend, um eine Dejustierung des Stößels und eine Beschädigung oder Zerstörung des Stößelschalters zu verhindern. Bei Wegfall der Überlastbeanspruchung auf das Bremspedal nimmt der Stößelschalter wieder die ursprünglich justierte Position ein. Falls eine Nachjustierung des Stößels im Stößelschalter erforderlich ist, beispielsweise wenn sich die Bremsbeläge des Kraftfahrzeuges abgenutzt haben, wird der Sockel gegenüber dem Gehäuse wieder zurückverdreht, so daß die Klinkenverzahnungen des Stößels und des Schlittens nicht mehr gegeneinander gepreßt werden. Der Stößelschalter wird zwar am Halteelement freigegeben, muß aber nicht entfernt werden, um die Nachjustierung des Stößel ausführen zu können. Da der Stößel nicht mehr vom Schlitten gepreßt wird, genügt ein einfaches Herausziehen des Stößels bzw. dessen Anlage am gedrückten Bremspedal, um eine erneute Justierung durchzuführen. Nach erfolgter Justierung wird das Gehäuse erneut gegenüber dem Sockel verdreht, so daß der Stößelschalter am Halteelement befestigt und die Klinkenverzahnungen des Stößels und des Schlittens gegeneinander gepreßt werden. So erfolgt auf einfache Weise eine Nachjustierung und Montage des Stößelschalters. Eine übermäßige Beanspruchung des Bremspedals entgegen seiner normalen Betätigungsrichtung führt nicht zu denen aus dem Stand der Technik bekannten Nachteilen, sondern gewährleistet die volle Funktionstüchtigkeit des Stößelschalters.

Ein weiterer Vorteil der Erfindung besteht in der einfachen Montierbarkeit des Stößelschalters. Da das Halteelement gestellfest am Kraftfahrzeug befestigt ist, kann der Stößelschalter mit einer Hand in das Halteelement eingesetzt und dann das Gehäuse gegenüber dem Sockel verdreht werden, um den Stößelschalter im Halteelement festzuspannen.

Um den Stößelschalter auf einfache Weise am Halteelement montieren zu können und damit eine Einhandmontage zu ermöglichen, ist der Sockel gegenüber dem Gehäuse mittels eines Bajonett-Verschlusses bei gleichzeitiger Befestigung des Stößelschalters am Halteelement verdrehbar und arretierbar. Hierzu besteht der Bajonett-Verschluß aus zumindest einer am Sockel angeformten Führungsnase und einem dazu korrespondierenden, am Gehäuse ausgebildeten Führungsschlitz. Zweckmäßigerweise ist das Gehäuse gegenüber dem Sockel mittels des Bajonett-Verschlusses in einem Winkelbereich von etwa 30° ... 45° verdrehbar, so daß nur ein relativ kurzer Verdrehweg zur Befestigung des Stößelschalters am Halteelement benötigt wird.

Durch die erläuterte Verdrehung des Gehäuses gegenüber dem Sockel wird der Befestigungsvorgang des Stößelschalters ausgeführt. Hierfür sind verschiedene Befestigungselemente notwendig. Dabei ist vorgesehen, daß an der Oberseite des Gehäuses und des Sockels jeweils zwei sich gegenüberliegende Nasen ausgebildet sind, wobei im nicht am Halteelement befestigten Zustand des Stößelschalters die jeweils zwei Nasen auf einer Seite und die jeweils zwei Nasen auf der gegenüberliegenden Seite des Gehäuses und des Sockels deckungsgleich aneinanderliegen. In diesem Zustand wird der Stößelschalter in das Halteelement eingesetzt und der zuvor beschriebene Verdrehvorgang des Gehäuses gegenüber dem Sockel ausgeführt. Somit liegen die an der Oberseite des Gehäuses angeordneten Nasen um etwa 30° ... 45° versetzt zu den dazu korrespondierenden Nasen an der Oberseite des Sockels, wodurch der Stößelschalter am Halteelement befestigt ist.

In der Regel ist es notwendig, daß der Stößelschalter in einer bestimmten Stellung am Halteelement befestigt ist. Eine um 180° verdrehte Einbaulage des Stößelschalters ist unerwünscht. Daher ist es besonders zweckmäßig, wenn die jeweils zwei Nasen auf einer Seite und die jeweils zwei Nasen auf der gegenüberliegenden Seite des Gehäuses und des Sockels unterschiedliche geometrische Formen aufweisen. Das Halteelement muß daher die entsprechende in gleicher Weise geometrisch geformte Öffnung aufweisen.

In weiterer Ausbildung der Erfindung ist vorgesehen, daß der Sockel den Schlitten und die sich ins Gehäuse erstreckende Klinkenverzahnung des Stößels umschließt. Die vom Sockel umschlossene, Klinkenverzahnung des Schlittens ist mit sich in Einsteckrichtung des Stößels erstreckenden Ausnehmungen versehen. Diese Ausnehmungen sind kreuzförmig in die Klinkenverzahnung des Schlittens eingelassen. Dadurch wird eine hohe Elastizität der Klinkenverzahnung des Schlittens gegenüber der Klinkenverzahnung des Stößels erreicht.

Weiterhin ist vorgesehen, daß der Schlitten als Druckhülse ausgebildet ist, wobei sich daran angeformte, die Klinkenverzahnung aufweisende federelastische Arme in den Hohlraum der Druckhülse erstrecken. Das am Gehäuse angeformte Druckelement weist ein kreisrundes Sackloch auf, das die federelastischen Arme der Druckhülse umschließt und dessen Umfangswand mit radialen Erhebungen versehen ist, welche bei am Halteelement befestigten Gehäuse radial gegen die federelastischen Arme der Druckhülse drücken. Durch die Verdrehung des Gehäuses relativ zum Sockel bei der Montage des Stößelschalters am Halteelement erfolgt somit zwangsläufig die Verdrehung des am Gehäuse angeformten Druckelementes, wodurch die radialen Erhebungen nun auf die federelastischen Arme der Druckhülse gedrückt werden. Hierdurch werden die Klinkenverzahnungen des Stößels und des Schlittens derart gegeneinander gepreßt, daß sich die Justierstellung des Stößels nicht selbständig verändern kann und ein Überlasten am Bremspedal schadlos übersteht. Beim Zurückdrehen des Gehäuses gegenüber dem Sockel im Falle einer Nachjustierung gelangen die radialen Erhebungen außer Eingriff mit den federelastischen Armen und gehen in die kreuzförmig angeordneten Ausnehmungen der Klinkenverzahnung der Druckhülse über. Die Klinkenverzahnungen des Stößels und des Schlittens werden nun nicht mehr gegeneinander gepreßt, so daß der Stößel längenverstellbar justiert werden kann.

Zur Erreichung einer sichereren Funktion der Klinkenanordnung ist nach einer vorteilhaften Weiterbildung der Erfindung die Anzahl der Zähne der Klinkenverzahnung des Stößels größer als die Anzahl der Zähne der Klinkenverzahnung der Druckhülse.

Um einerseits eine vorteilhafte spritztechnische Fertigung der Klinkenverzahnungen am Stößel und am Schlitten zu erreichen und um andererseits ein schwereres Ineinanderschieben sowie ein leichteres Auseinanderschieben von Druckhülse und Stößel zu erzielen, beträgt der Flankenwinkel jedes Zahnes der Klinkenverzahnungen des Stößels und der Druckhülse 90°, wobei der in Einsteckrichtung des Stößels hintere Teilflankenwinkel kleiner ist als der vordere Teilflankenwinkel.

Nach einer Weiterbildung der Erfindung ist das Aufnahmeteil als Federkorb ausgebildet, in dem eine Druckfeder lagert, welche die Druckhülse umgibt und sich einerseits am Aufnahmeteil und andererseits am Federkorb abstützt. Diese Druckfeder ermöglicht einen Kontaktweg des durch die Betätigung des Stößels bewegbaren Schaltgliedes, das mit der Kontakteinheit eines elektrischen Schalters verbunden ist. Damit die volle Längenverschiebbarkeit des Stößels gewährleistet ist, ist am Boden des Federkorbes eine Durchtrittsöffnung für den Stößel ausgebildet.

Weitere konstruktive Ausgestaltungen der Erfindung bestehen darin, daß der obere Rand des Federkorbes eine nach innen gerichtete Abwinkelung aufweist, die an einer am oberen Rand des Sockels angeformten Innenschulter anlegbar ist, und daß der obere Rand der Druckhülse mit einer an die Abwinkelung des Federkorbes anlegbaren Auskragung versehen ist. Darüber hinaus weist der Federkorb umfangsseitig einen Stützring auf, der sich gegen den Sockel abstützt.

Zusätzlich zu der im Federkorb gelagerten Druckfeder, die sich am Aufnahmeteil und am Federkorb abstützt, ist im Sockel eine Druckfeder angeordnet, welche den Federkorb teilweise umgibt und sich einerseits am Sockelboden und andererseits am Stützring des Federkorbes abstützt. Diese zusätzliche Druckfeder ist dazu bestimmt, einen möglichen Überhub durch Aufnahme der auf das Bremspedal ausgeübten Überlast aufzunehmen und auszugleichen, wenn das Bremspedal entgegen seiner normalen Betätigungsrichtung bewegt wird. Zu diesem Zweck weist die im Inneren des Federkorbes angeordnete Druckfeder eine geringere Federkraft auf als die im Sockel aufgenommene, den Federkorb umgebende Druckfeder. Befindet sich das Bremspedal in seiner Ruhestellung, stützt sich die Druckhülse entgegen der ersten Druckfeder gegen den Federkorb ab. Bei Anlage einer Überlast entgegen der normalen Betätigungsrichtung des Bremspedals wird zusätzlich der Federkorb entgegen der Druckkraft der am Sockel abgestützten Druckfeder gepreßt und der Überhubweg ausgenutzt und somit die Überlast abgefangen.

Um den Zusammenbau des Stößelschalters selbst zu verbessern, besteht der Sockel aus einem Sockeloberteil und einem Sockelunterteil. Dadurch können die benötigten Einzelteile, wie Druckfedern, Federkorb und Druckhülse, auf einfache Weise im Sockel montiert werden, der dann seinerseits im Gehäuse des Stößelschalters angeordnet wird.

In Weiterbildung der Erfindung ist das Schaltglied am Federkorb angeformt und ragt seitlich durch eine im Gehäuse bzw. dem Sockel ausgebildete Aussparung in den am Gehäuse angeordneten elektrischen Schalter. Dadurch legt der das Schaltglied den vorgesehenen Kontaktweg von etwa 6 mm bei Betätigung des Bremspedals zurück.

Um jedoch von der vorgegebenen Kontaktweglänge unabhängig zu sein, indem beispielsweise unterschiedlich gestaltete, mit einer Kontakteinheit versehene elektrische Schalter am Gehäuse des Stößelschalters befestigt werden können, ist das Schaltglied als abgeschrägte Rampe ausgebildet und mit der Kontakteinheit des elektrischen Schalters in Eingriff bringbar. Wenn die am Gehäuse des Stößelschalters anbringbaren elektrischen Schalter mit unterschiedlichen Anzahlen und Ausbildungen von Kontakten bzw. Kontaktbrücken bestückt werden, so kann auch der Einsatzzweck des erfindungsgemäßen Stößelschalters variiert werden. So ist es möglich, diesen als Bremslichtschalter, als Kontaktöffner und -schließer für Kupplungskontrollschalter usw. in benzin- oder dieselgetriebenen Kraftfahrzeugen zu verwenden.

Schließlich ist vorgesehen, daß das Halteelement als gestellfest am Kraftfahrzeug befestigbare Halteplatte ausgebildet ist. Dabei ist es zweckmäßig, wenn die Halteplatte mit einer Öffnung für den Durchgang des Stößels und die am Gehäuse und am Sockel ausgebildeten Nasen versehen ist.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der Erfindungsgedanke wird in der nachfolgenden Beschreibung anhand eines Ausführungsbeispieles, das in den Zeichnungen dargestellt ist, näher erläutert. Es zeigen
- Fig. 1: einen Längsschnitt durch den an einem Halteelement montierten erfindungsgemäßen Stößelschalter,
- Fig. 2: eine Explosivdarstellung der Einzelteile des Stößelschalters nach Fig. 1,
- Fig. 3: eine Explosivdarstellung der Einzelteile des Stößelschalters in einer anderen Ansicht nach Fig. 1,

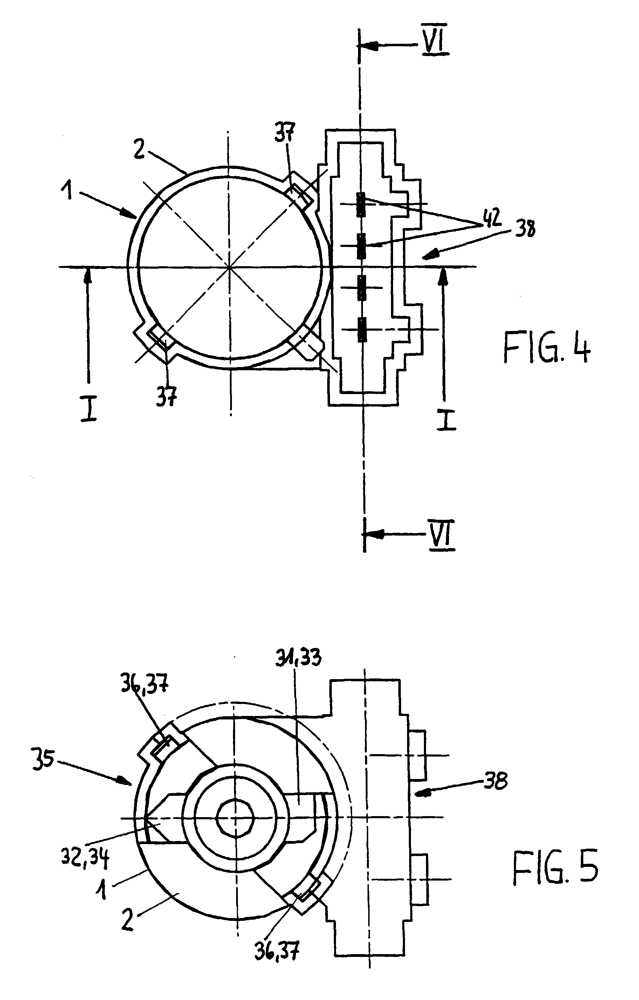

- Fig. 4: eine Unteransicht des Stößelschalters nach Fig. 6,
- Fig. 5: eine Draufsicht auf den Stößelschalter nach Fig. 1,
- Fig. 6: eine Seitenansicht des Stößelschalters nach Fig. 4,
- Fig. 7: eine Teilschnittansicht des Stößelschalters nach Fig. 1,
- Fig. 8: eine Draufsicht auf das Gehäuseoberteil des Stößelschalters nach Fig. 1 und
- Fig. 9: eine Teilansicht des Halteelementes für den Stößelschalter.

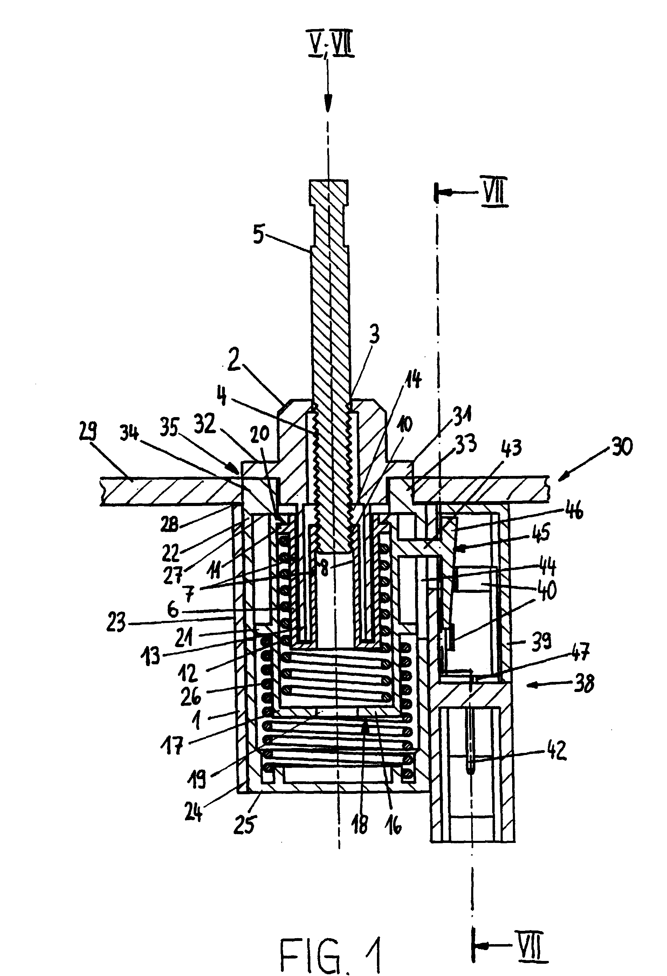

Der Stößelschalter weist ein Gehäuse 1 auf, dessen Oberteil 2 mit einer Öffnung 3 versehen ist, die sich im Gehäuseoberteil 2 im Durchmesser erweitert. In dieser Öffnung 3 wird ein mit einer Klinkenverzahnung 4 versehener Stößel 5 geführt. Im Inneren des Gehäuses 1 ist ein als Druckhülse 6 ausgebildeter Schlitten 7 angeordnet, in dessen Hohlraum vier federelastische Arme 8 hineinragen, die durch Ausnehmungen 9 voneinander getrennt sind. Die nach oben gerichteten Enden der federelastischen Arme 8 weisen jeweils eine Klinkenverzahnung 10 auf, die sich mit der Klinkenverzahnung 4 des Stößels 5 im montierten Zustand des Stößelschalters in Eingriff befinden. Die Zähne der Klinkenverzahnung 4 sind am Stößel 5 umlaufend an dessen Umfang ausgebildet. Der Stößel 5 ist zur Justierung mit der Druckhülse 6 vorgesehen. Der Justierweg des Stößels 5 bestimmt sich durch die Länge seiner Klinkenverzahnung 4. Wie aus Fig. 1 zu ersehen ist, ist die Anzahl der Zähne der Klinkenverzahnung 4 des Stößels 5 größer als die Anzahl der Zähne der Klinkenverzahnung 10 der Druckhülse 6.

Im Detail nicht dargestellt, jedoch hinreichend in der DE 32 30 414 C2 beschrieben, beträgt der Flankenwinkel jedes Zahnes der Klinkenverzahnungen 4 und 10 des Stößels 5 und der Druckhülse 6 90°. Der in Einsteckrichtung des Stößels 5 hintere Teilflankenwinkel ist kleiner als der vordere Teilflankenwinkel jedes Zahnes.

Die Druckhülse 6 weist in ihrem oberen Bereich eine zu ihrem Außenumfang verlaufende Auskragung 11 auf, die sich an einer ersten, im Gehäuse 1 angeordneten Druckfeder 12 in Anlage befindet.

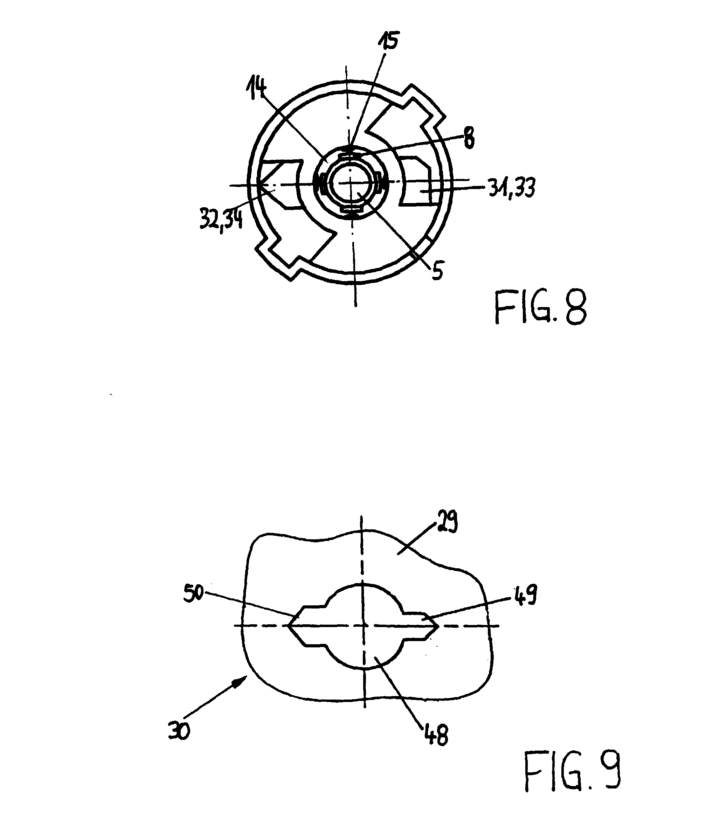

Vom Gehäuseoberteil 2 erstreckt sich ins Innere des Gehäuses 1 ein Druckelement 13, welches mit einem Sackloch 14 versehen ist, das in die darüberliegende Öffnung 3 im Gehäuseoberteil 2 übergeht. Am Innenumfang des kreisrunden Sachloches 14 sind, wie aus Fig. 8 ersichtlich, radiale Erhebungen 15 ausgebildet. Diese verlaufen am Sackloch 14 in Einsteckrichtung des Stößels 5 und sind kreuzförmig an der Innenwand des Sackloches 14 angeordnet. Das Druckelement 13 überdeckt die federelastischen Arme 8 der Druckhülse 6.

Die Druckfeder 12, welche die Druckhülse 6 umfangsseitig umgibt, stützt sich am Boden 16 eines als Federkorb 17 ausgebildeten Aufnahmeteils 18 ab. Der Boden 16 des Federkorbes 17 weist eine Durchtrittsöffnung 19 für den Stößel 5 auf, wobei die Durchtrittsöffnung 19 einen geringfügig größeren Durchmesser aufweist als der Durchmesser der Stößels 5. Am oberen Rand des Federkorbes 17 ist eine radial nach innen gerichtete Abwinkelung 20 ausgebildet, an der die Auskragung 11 der Druckhülse 6 anliegt. Etwa im mittleren Bereich des Federkorbes 17 weist dieser einen umfangsseitigen Stützring 21 auf. Dieser stützt sich am Innenumfang eines im Gehäuse 1 angeordneten Sockels 22 ab, der den Federkorb 17 sowie die von diesem umgebene Druckhülse 6 vollständig umschließt. Der Sockel 22 wird durch ein Sockeloberteil 23 und ein Sockelunterteil 24 gebildet. Im Inneren des Sockelunterteils 24 stützt sich am Sockelboden 25 eine weitere Druckfeder 26 ab, die sich an ihrer entgegengesetzten Seite am Stützring 21 des Federkorbes 17 abstützt. Die Druckfeder 26 weist eine größere Federkraft auf als die Druckfeder 12 im Federkorb 17. Der Abstand des Bodens 16 des Federkorbes 17 zum Sockelboden 25 des Sockelunterteils 24, auf dem die zweite Druckfeder 26 aufliegt, bestimmt den Überhubweg.

Am oberen Rand des Sockeloberteils 23 ist eine radial nach innen gerichtete Innenschulter 27 angeformt, die sich in Anlage mit dem Gehäuseoberteil 2 befindet. In unmittelbarer Nähe dazu weist das Gehäuse 1 eine Auflageschulter 28 für ein als Halteplatte 29 ausgebildetes Halteelement 30 auf.

Am Gehäuseoberteil 2 sind zwei sich radial davon erstreckende Nasen 31 und 32 ausgebildet. Die Nase 31 weist eine andere geometrische Forma auf als die Nase 32. In dazu korrespondierender Weise sind auf der Oberseite des Sockeloberteils 23 des Sockels 22 Nasen 33 und 34 ausgebildet. Die Nase 33 des Sockeloberteils 23 besitzt die gleiche geometrische Form wie die Nase 31 des Gehäuseoberteils 2; ebenso besitzt die Nase 34 des Sockeloberteils 23 die gleiche geometrische Form wie die Nase 32 am Gehäuseoberteil 2. Im nicht befestigten Zustand des Stößelschalters am Halteelement 30 sind die Nasen 31 und 33 bzw. 32 und 34 des Gehäuseoberteils 2 bzw. des Sokkeloberteils 23 deckungsgleich aneinander gelegt.

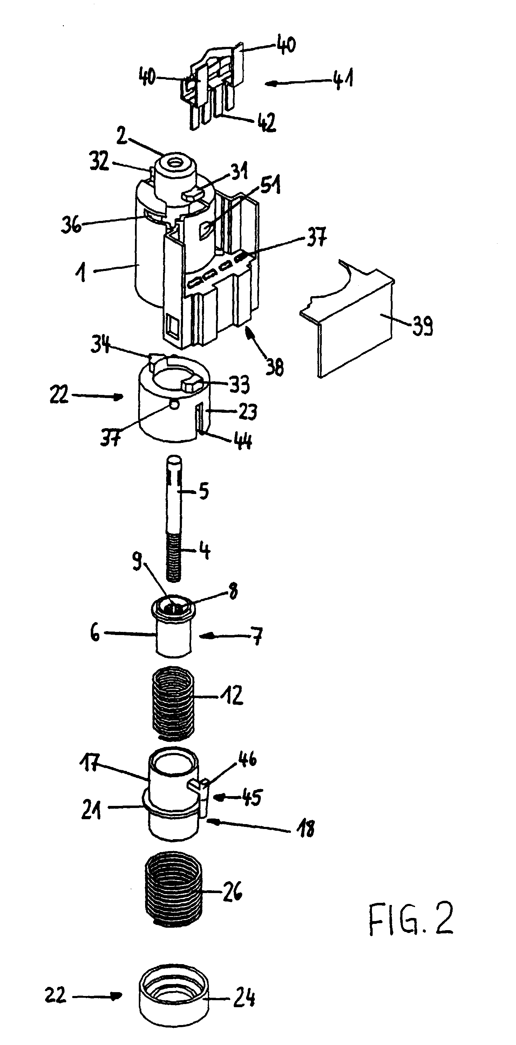

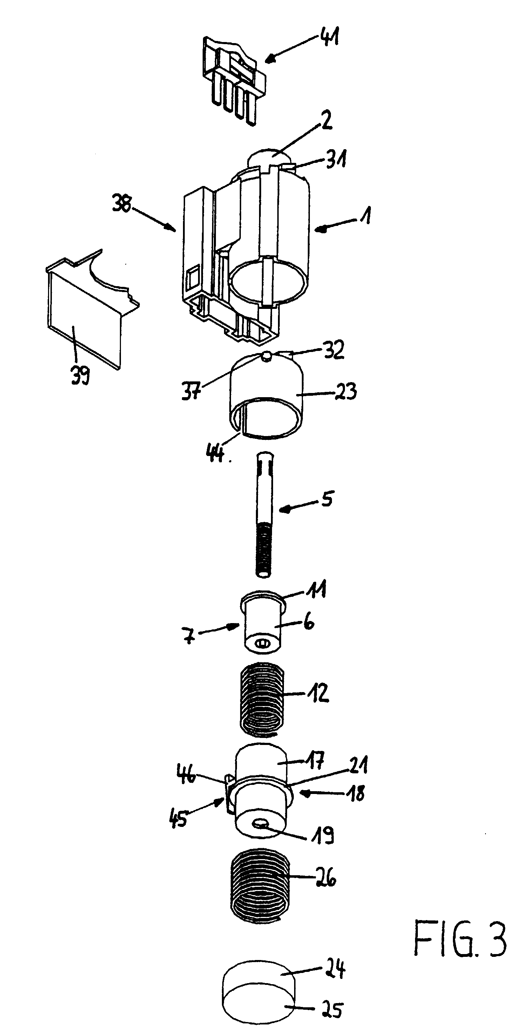

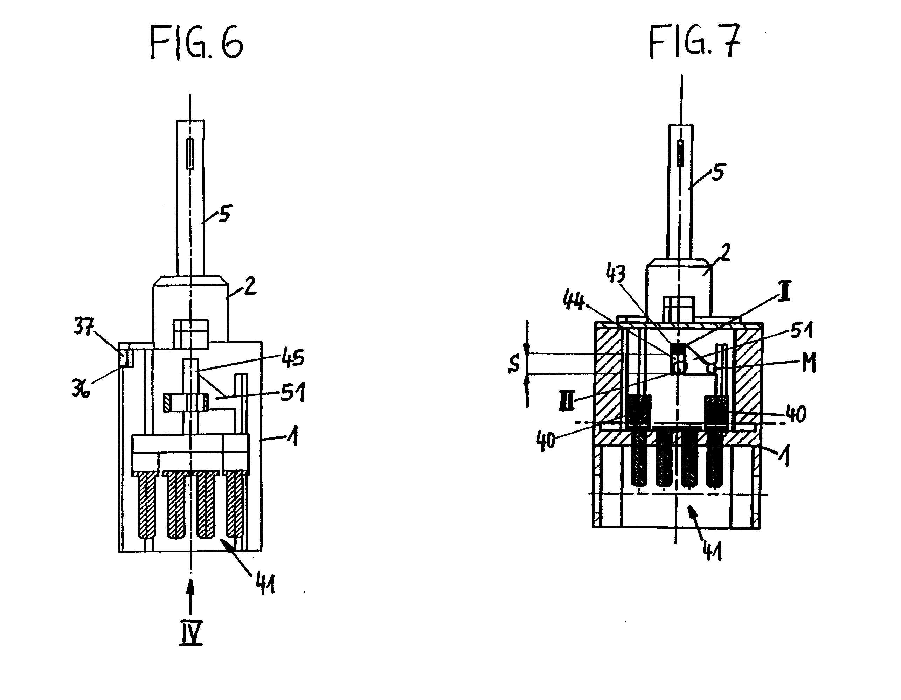

Im oberen Bereich des Stößelschalters ist ein Bajonett-Verschluß 35 ausgebildet. Wie insbesondere aus den Fig. 2,3 und 5 zu ersehen ist, sind im Gehäuse 1 zwei sich diametral gegenüberliegende Führungsschlitze 36 ausgeformt. Am Sokkeloberteil 23 sind zwei sich diametral gegenüberliegende Führungsnasen 37 angebracht, die im montierten Zustand des Stößelschalters in die Führungsschlitze 36 des Gehäuses 1 einsetzbar sind.

Seitlich am Gehäuse 1 ist ein elektrischer Schalter 38 angeordnet. Im oberen, von einem Deckel 39 verschließbaren Teil des elektrischen Schalters 38 sind elektrische Kontakte 40 einer im elektrischen Schalter 38 angeordneten Kontakteinheit 41 vorgesehen. Im unteren Teil des elektrischen Schalters 38 erstrecken sich von der Kontakteinheit eine Mehrzahl elektrischer Steckelemente 42 nach unten.

Der Federkorb 17 weist einen seitlichen Steg 43 auf, der sich radial vom Federkorb 17 durch eine im Sockeloberteil 23 bzw. dem Gehäuse 1 ausgebildete Aussparung 44 erstreckt. Im Inneren des durch den Deckel 39 verschließbaren oberen Teils des elektrischen Schalters 38 geht der Steg 43 in ein Schaltglied 45 über. Dieses Schaltglied 45 ist als Rampe 46 ausgebildet, d.h., daß dieses eine schiefe Ebene aufweist und mit den Kontakten 40 der Kontakteinheit 41 des elektrischen Schalters 38 in Eingriff bringbar ist. Der Kontaktweg S (Fig. 7), den der Steg 43 bei einer Betätigung des Stößelschalters zurücklegt, beträgt etwa 6 mm. Durch die schräge Ausbildung der Rampe 46 des Schaltgliedes 45 vergrößert sich der Kontaktweg S innerhalb des elektrischen Schalters 38 relativ zu den Kontakten 40 der Kontakteinheit 41. Aus Fig. 2 ist die Kontaktaufnahme 47 für die Kontakteinheit 41 innerhalb des elektrischen Schalters 38 ersichtlich.

Das als Halteplatte 29 ausgebildete Halteelement 30 weist gemäß Fig. 9 eine zentrale Öffnung 48 auf. Seitlich dieser Öffnung 48 sind Durchgänge 49 und 50 ausgebildet. Der Durchgang 49 besitzt eine geometrische Form, die der Nase 31 am Gehäuseoberteil 2 und der Nase 33 am Sockeloberteil 23 entspricht. Der Durchgang 50 besitzt in entsprechender Weise eine geometrische Form, welche der Nase 32 und 34 des Gehäuseoberteils 2 bzw. Sockeloberteils 23 entspricht.

Um den Stößelschalter an der Halteplatte 29 zu befestigen, wird das den Stößel 5 führende Gehäuseoberteil 2 von der Rückseite der Halteplatte 29 soweit in diese eingesetzt, daß der Stößel 5 und die Nasen 31 und 32 am Gehäuseoberteil 2 durch die entsprechenden Durchgänge 49 bzw. 50 hindurchragen, so daß die darunter befindlichen, auf dem Sockeloberteil 23 angeformten Nasen 33 und 34 in die entsprechenden Durchgänge 49 bzw. 50 eingreifen, wodurch die Halteplatte 29 auf der Auflageschulter 28 des Gehäuses 1 aufliegt. Gleichzeitig wird der Stößel 5 mit seiner Oberseite an einem nicht dargestellten, in Bremsstellung befindlichen Bremspedal angelegt. Dadurch justiert sich der Stößel 5 automatisch, wobei die Klinkenverzahnung 4 des Stößels 5 mit der Klinkenverzahnung 10 der Druckhülse 6 in Eingriff gelangt. Hierbei befinden sich auch die am Druckelement 13 ausgebildeten Erhebungen 15 in den Ausnehmungen 9 zwischen den federelastischen Armen 8 der Druckhülse 6. Des weiteren befindet sich der mit der Rampe 46 versehene Steg 43 in der in Fig. 7 dargestellten Montagestellung M einer am Sockel 22 bzw. am Gehäuse 1 ausgebildeten Führungsnut 51. In diesem Zustand befinden sich die Führungsnasen 37 am Sockel 22 nur im losen Eingriff mit den Führungsschlitzen 36 des Gehäuses 1 des Bajonett-Verschlusses 35. Nun wird das Gehäuse 1 gegenüber dem darin angeordneten Sockel 22 in einem Winkel von etwa 30° verdreht, so daß die Führungsnasen 27 mit den Enden der zugehörigen Führungsschlitze 36 im Gehäuse 1 in Verschlußeingriff gelangen. Gleichzeitig verdrehen sich die am Gehäuseoberteil 2 ausgebildeten Nasen 31 und 32 gegenüber den in der Halteplatte 29 arretierten Nasen 33 und 34 des Sockeloberteils 23, wobei die Nasen 31 und 32 des Gehäuses 1 dieses an der Halteplatte 29 befestigen. Während dieser Drehbewegung verdreht sich zwangsläufig auch das am Gehäuse 1 ausgebildete Druckelement 13. Dadurch gelangen die daran ausgebildeten Erhebungen in Eingriff mit den Rückseiten der die Klinkenverzahnung 10 aufweisenden elastischen Arme 8, so daß die Klinkenverzahnung 10 gegen die Klinkenverzahnung 4 des Stößels 5 gepreßt wird. Dabei wird der Stößel 5 fest arretiert. Nun ist Steg 43 gemäß Fig. 7 aus seiner Montagestellung M in die Arbeitsstellung I (gedrücktes Bremspedal) übergegangen. In dieser Stellung ist der Steg 43 voll gezeichnet. Wird das Bremspedal losgelassen, bewegt sich der Stößel 5 nach unten, so daß die Druckhülse 6 entgegen der Federwirkung der Druckfeder 12 nach unten gedrückt wird, da die Wirkung dieser Druckfeder 12 geringer ist als die Kraft, die durch das durch eine nicht dargestellte Zugfeder belastete Bremspedal ausübt. Der Steg 43 geht nun in die in Fig. 7 gezeigte Ruhestellung II über. Dabei gelangt das als Rampe 46 ausgebildete Schaltglied 45 außer Eingriff mit den Kontakten 40 der Kontakteinheit 41 im elektrischen Schalter 38.

Wird aus irgendeinem Grund das Bremspedal weiter entgegen seiner normalen Bremsrichtung betätigt, so wird der Stößel 5 weiter nach unten gedrückt und die Federkraft der im Sockel 22 gelagerten Druckfeder 26 überwunden und die Überlast des Bremspedals abgefangen.

Im Falle einer Nachjustierung des Stößels 5 wird erneut das Bremspedal betätigt, während gleichzeitig das Gehäuse 1 gegen den darin befindlichen Sockel verdreht wird, wobei der Stößelschalter außer Eingriff mit der Halteplatte 29 gelangen kann. Die zuvor beschriebenen Funktionen der Einzelteile des Stößelschalters laufen hierbei in umgekehrter Weise ab. Nun kann der Stößel 5 des Stößelschalters erneut justiert werden.

### Liste der Bezugszeichen

- 1: Gehäuse
- 2: Gehäuseoberteil
- 3: Öffnung
- 4: Klinkenverzahnung
- 5: Stößel
- 6: Druckhülse
- 7: Schlitten
- 8: Arm
- 9: Ausnehmung
- 10: Klinkenverzahnung
- 11: Auskragung
- 12: Druckfeder
- 13: Druckelement
- 14: Sackloch
- 15: Erhebung
- 16: Boden
- 17: Federkorb
- 18: Aufnahmeteil
- 19: Durchtrittsöffnung
- 20: Abwinkelung
- 21: Stützring
- 22: Sockel
- 23: Sockeloberteil
- 24: Sockelunterteil
- 25: Sockelboden
- 26: Druckfeder
- 27: Innenschulter
- 28: Auflageschulter
- 29: Halteplatte
- 30: Halteelement
- 31: Nase
- 32: Nase
- 33: Nase
- 34: Nase
- 35: Bajonett-Verschluß
- 36: Führungsschlitz
- 37: Führungsnase
- 38: Schalter
- 39: Deckel
- 40: Kontakt
- 41: Kontakteinheit
- 42: Steckelement
- 43: Steg
- 44: Aussparung
- 45: Schaltglied
- 46: Rampe
- 47: Kontaktaufnahme
- 48: Öffnung
- 49: Durchgang
- 50: Durchgang
- 51: Führungsnut

## Patentansprüche

1. Stößelschalter, insbesondere Bremslichtschalter für Kraftfahrzeuge, mit einem an einem Halteelement (30) befestigbaren Gehäuse (1), in dem ein selbsttätig justierbarer, mit einer Klinkenverzahnung (4) versehener Stößel (5) geführt ist, einem federbelasteten Schlitten (7), der eine Klinkenverzahnung (10) aufweist, die mit der des Stößels (5) zusammenwirkt, und einem bei Betätigung des Stößels (5) bewegbaren Schaltglied (45), welches mit einer Kontakteinheit (41) eines elektrischen Schalters (38) in Eingriff bringbar ist,
dadurch gekennzeichnet, daß
- ein im Gehäuse (1) angeordneter Sockel (22) zum Befestigen am Halteelement (30) gegenüber dem Gehäuse (1) verdrehbar ist,
- an der Klinkenverzahnung (10) des Schlittens (7) mehrere Ausnehmungen (9) ausgebildet sind,
- ein am Gehäuse (1) angeformtes Druckelement (13) gegen die Klinkenverzahnung (10) des Schlittens (7) anlegbar ist und
- der federbelastete Schlitten (7) gegen ein im Gehäuse (1) geführtes, federbelastetes Aufnahmeteil (18) abgestützt ist.

2. Stößelschalter nach Anspruch 1, dadurch gekennzeichnet, daß der Sockel (22) gegenüber dem Gehäuse (1) mittels eines Bajonett-Verschlusses (35) bei gleichzeitiger Befestigung des Stößelschalters am Halteelement (30) verdrehbar und arretierbar ist.

3. Stößelschalter nach Anspruch 1 oder 2, dadurch gekennzeichnet, daß der Bajonett-Verschluß (35) aus zumindest einer am Sockel (22) angeformten Führungsnase (37) und einem dazu korrespondierenden, am Gehäuse (1) ausgebildeten Führungsschlitz (36) besteht.

4. Stößelschalter nach einem der Ansprüche 1 bis 3, dadurch gekennzeichnet, daß das Gehäuse (1) gegenüber dem Sockel (22) mittels des Bajonett-Verschlusses (35) in einem Winkelbereich von etwa 30° bis 45° verdrehbar ist.

5. Stößelschalter nach einem der Ansprüche 1 bis 4, dadurch gekennzeichnet, daß an der Oberseite (2) des Gehäuses (1) und des Sockels (22) jeweils zwei sich gegenüberliegende Nasen (31-34) ausgebildet sind, wobei im nicht am Halteelement (30) befestigten Zustand des Stößelschalters die jeweils zwei Nasen (31,33) auf einer Seite und die jeweils zwei Nasen (32,34) auf der gegenüberliegenden Seite des Gehäuses (1) und des Sockels (22) dekkungsgleich aneinanderliegen.

6. Stößelschalter nach einem der Ansprüche 1 bis 5, dadurch gekennzeichnet, daß die jeweils zwei Nasen (31,33) auf einer Seite und die jeweils zwei Nasen (32,34) auf der gegenüberliegenden Seite des Gehäuses (1) und des Sokkels (22) unterschiedliche geometrische Formen aufweisen.

7. Stößelschalter nach einem der Ansprüche 1 bis 6, dadurch gekennzeichnet, daß der Sockel (22) den Schlitten (7) und die sich ins Gehäuse (1) erstreckende Klinkenverzahnung (4) des Stößels (4) umschließt.

8. Stößelschalter nach einem der Ansprüche 1 bis 7, dadurch gekennzeichnet, daß sich die Ausnehmungen (9) an der Klinkenverzahnung (10) des Schlittens (7) in Einsteckrichtung des Stößels (5) erstrecken.

9. Stößelschalter nach einem der Ansprüche 1 bis 8, dadurch gekennzeichnet, daß die Ausnehmungen (9) kreuzförmig in die Klinkenverzahnung (10) des Schlittens (7) eingelassen sind.

10. Stößelschalter nach einem der Ansprüche 1 bis 9, dadurch gekennzeichnet, daß der Schlitten (7) als Druckhülse (6) ausgebildet ist, wobei sich daran angeformte, die Klinkenverzahnung aufweisende (10) federelastische Arme (8) in den Hohlraum der Druckhülse (6) erstrecken.

11. Stößelschalter nach einem der Ansprüche 1 bis 10, dadurch gekennzeichnet, daß das am Gehäuse (1) angeformte Druckelement (13) ein kreisrundes Sackloch (14) aufweist, das die federelastischen Arme (8) der Druckhülse (6) umschließt und dessen Umfangswand mit radialen Erhebungen (15) versehen ist, welche bei am Halteelement (30) befestigten Gehäuse (1) radial gegen die federelastischen Arme (8) der Druckhülse (6) drücken.

12. Stößelschalter nach einem der Ansprüche 1 bis 11, dadurch gekennzeichnet, daß die Zähne der Klinkenverzahnung (4) am Stößel (5) umlaufend ausgebildet sind.

13. Stößelschalter nach einem der Ansprüche 1 bis 12, dadurch gekennzeichnet, daß die Anzahl der Zähne der Klinkenverzahnung (4) des Stößels (5) größer als die Anzahl der Zähne der Klinkenverzahnung (10) der Druckhülse (6) ist.

14. Stößelschalter nach einem der Ansprüche 1 bis 13, dadurch gekennzeichnet, daß der Flankenwinkel jedes Zahnes der Klinkenverzahnungen (4,10) des Stößels (5) und der Druckhülse (6) 90° beträgt, wobei der in Einsteckrichtung des Stößels (5) hintere Teilflankenwinkel kleiner ist als der vordere Teilflankenwinkel.

15. Stößelschalter nach einem der Ansprüche 1 bis 14, dadurch gekennzeichnet, daß das Aufnahmeteil (18) als Federkorb (17) ausgebildet ist, in dem eine Druckfeder (12) lagert, welche die Druckhülse (6) umgibt und sich einerseits am Aufnahmeteil (18) und andererseits am Federkorb (17) abstützt.

16. Stößelschalter nach einem der Ansprüche 1 bis 15, dadurch gekennzeichnet, daß am Boden (16) des Federkorbes (17) eine Durchtrittsöffnung (19) für den Stößel (5) ausgebildet ist.

17. Stößelschalter nach einem der Ansprüche 1 bis 16, dadurch gekennzeichnet, daß der obere Rand des Federkorbes (17) eine nach innen gerichtete Abwinkelung (20) aufweist, die an einer am oberen Rand des Sockels (22) angeformten Innenschulter (27) anlegbar ist.

18. Stößelschalter nach einem der Ansprüche 1 bis 17, dadurch gekennzeichnet, daß der obere Rand der Druckhülse (6) mit einer an die Abwinkelung (20) des Federkorbes (17) anlegbaren Auskragung (11) versehen ist.

19. Stößelschalter nach einem der Ansprüche 1 bis 18, dadurch gekennzeichnet, daß der Federkorb (17) umfangsseitig einen Stützring (21) aufweist, der sich gegen den Sockel (22) abstützt.

20. Stößelschalter nach einem der Ansprüche 1 bis 19, dadurch gekennzeichnet, daß im Sockel (22) eine Druckfeder (26) angeordnet ist, welche den Federkorb (17) teilweise umgibt und sich einerseits am Sockelboden (25) und andererseits am Stützring (21) des Federkorbes (17) abstützt.

21. Stößelschalter nach einem der Ansprüche 1 bis 20, dadurch gekennzeichnet, daß die im Inneren des Federkorbes (17) angeordnete Druckfeder (12) eine geringere Federkraft aufweist als die im Sockel (22) aufgenommene, den Federkorb (17) umgebende Druckfeder (26).

22. Stößelschalter nach einem der Ansprüche 1 bis 21, dadurch gekennzeichnet, daß der Sockel (22) aus einem Sokkeloberteil (23) und einem Sockelunterteil (24) besteht.

23. Stößelschalter nach einem der Ansprüche 1 bis 22, dadurch gekennzeichnet, daß das Schaltglied (45) am Federkorb (17) angeformt ist und seitlich durch eine im Gehäuse (1) bzw. den Sockel (22) ausgebildete Aussparung (44) in den am Gehäuse (1) angeordneten elektrischen Schalter (38) ragt.

24. Stößelschalter nach einem der Ansprüche 1 bis 23, dadurch gekennzeichnet, daß das Schaltglied (45) als abgeschrägte Rampe (46) ausgebildet und mit der Kontakteinheit (41) des elektrischen Schalters (38) in Eingriff bringbar ist.

25. Stößelschalter nach einem der Ansprüche 1 bis 24, dadurch gekennzeichnet, daß das Halteelement (30) als gestellfest am Kraftfahrzeug befestigbare Halteplatte (29) ausgebildet ist.

26. Stößelschalter nach einem der Ansprüche 1 bis 25, dadurch gekennzeichnet, daß die Halteplatte (29) mit einer Öffnung (48) für den Durchgang des Stößels (5) und die am Gehäuse (1) und am Sockel (22) ausgebildeten Nasen (31-34) versehen ist.

## Claims

1. Rod-actuated switch, more especially a brake light switch for automotive vehicles, having a housing (1), which is mountable on a retaining element (30), and in which is guided an automatically adjustable rod (5), which is provided with a pawl toothing (4), having a spring-loaded carriage (7), which has a pawl toothing (10), which cooperates with the toothing of the rod (5), and having a switching member (45), which is displaceable upon actuation of the rod (5) and can be brought into engagement with a contact unit (41) of an electrical switch (38),
characterised in that
- a socket (22), which is disposed in the housing (1), is rotatable relative to the housing (1) for mounting on the retaining element (30),
- a plurality of recesses (9) are provided in the pawl toothing (10) of the carriage (7),
- a pressing means (13), which is provided on the housing (1), is abuttable against the pawl toothing (10) of the carriage (7), and
- the spring-loaded carriage (7) is supported against a spring-loaded receiver member (18), which is guided in the housing (1).

2. Rod-actuated switch according to claim 1, characterised in that the socket (22) is rotatable and lockable relative to the housing (1) by means of a bayonet-type closure (35) with a simultaneous mounting of the rod-actuated switch on the retaining element (30).

3. Rod-actuated switch according to claim 1 or 2, characterised in that the bayonet-type closure (35) comprises at least one guide projection (37), which is provided on the socket (22), and a guide slot (36), which corresponds to said projection and is provided in the housing (1).

4. Rod-actuated switch according to one of claims 1 to 3, characterised in that the housing (1) is rotatable relative to the socket (22) by means of the bayonet-type closure (35) in an angular range of between substantially 30° and 45°.

5. Rod-actuated switch according to one of claims 1 to 4, characterised in that two oppositely situated projections (31-34) are respectively provided on the upper side (2) of the housing (1) and of the socket (22), the two respective projections (31, 33) on one side and the two respective projections (32, 34) on the oppositely situated side of the housing (1) and of the socket (22) lying congruently adjacent one another when the rod-actuated switch is not mounted on the retaining element (30).

6. Rod-actuated switch according to one of claims 1 to 5, characterised in that the two respective projections (31, 33) on one side and the two respective projections (32, 34) on the oppositely situated side of the housing (1) and of the socket (22) have different geometrical shapes.

7. Rod-actuated switch according to one of claims 1 to 6, characterised in that the socket (22) surrounds the carriage (7) and the pawl toothing (4) of the rod (5), which toothing extends into the housing (1).

8. Rod-actuated switch according to one of claims 1 to 7, characterised in that the recesses (9) in the pawl toothing (10) of the carriage (7) extend in the direction of insertion of the rod (5).

9. Rod-actuated switch according to one of claims 1 to 8, characterised in that the recesses (9) are provided in the form of a cross in the pawl toothing (10) of the carriage (7).

10. Rod-actuated switch according to one of claims 1 to 9, characterised in that the carriage (7) is provided as pressure sleeve (6), resilient arms (8) being provided on said carriage, said arms having the pawl toothing (10) and extending into the cavity of the pressure sleeve (6).

11. Rod-actuated switch according to one of claims 1 to 10, characterised in that the pressing means (13), which is provided on the housing (1), has a circular blind bore (14), which surrounds the resilient arms (8) of the pressure sleeve (6) and has a circumferential wall provided with radial raised portions (15), which press radially against the resilient arms (8) of the pressure sleeve (6) when housing (1) is mounted on the retaining element (30).

12. Rod-actuated switch according to one of claims 1 to 11, characterised in that the teeth of the pawl toothing (4) on the rod (5) are circumferential.

13. Rod-actuated switch according to one of claims 1 to 12, characterised in that the number of teeth of the pawl toothing (4) of the rod (5) is greater than the number of teeth of the pawl toothing (10) of the pressure sleeve (6).

14. Rod-actuated switch according to one of claims 1 to 13, characterised in that the flank angle of each tooth of the pawl toothings (4, 10) of the rod (5) and of the pressure sleeve (6) is 90°, the rear partial flank angle being smaller than the front partial flank angle when viewed with respect to the direction of insertion of the rod (5).

15. Rod-actuated switch according to one of claims 1 to 14, characterised in that the receiver member (18) is configured as resilient basket (17), in which lies a compression spring (12), which surrounds the pressure sleeve (6) and is supported with one end on the receiver member (18) and with the other end on the resilient basket (17).

16. Rod-actuated switch according to one of claims 1 to 15, characterised in that a through-aperture (19) for the rod (5) is provided in the base (16) of the resilient basket (17).

17. Rod-actuated switch according to one of claims 1 to 16, characterised in that the upper edge of the resilient basket (17) has an inwardly orientated angular portion (20), which is abuttable against an internal shoulder (27) provided on the upper edge of the socket (22).

18. Rod-actuated switch according to one of claims 1 to 17, characterised in that the upper edge of the pressure sleeve (6) is provided with a projection member (11), which is abuttable against the angular portion (20) of the resilient basket (17).

19. Rod-actuated switch according to one of claims 1 to 18, characterised in that the resilient basket (17) has, on its periphery, a supporting ring (21) which is supported against the socket (22).

20. Rod-actuated switch according to one of claims 1 to 19, characterised in that a compression spring (26) is disposed in the socket (22) and partially surrounds the resilient basket (17), said spring being supported with one end on the socket base (25) and with the other end on the supporting ring (21) of the resilient basket (17).

21. Rod-actuated switch according to one of claims 1 to 20, characterised in that the compression spring (12), which is disposed in the interior of the resilient basket (17), has a smaller resilient force than the compression spring (26), which is accommodated in the socket (22) and surrounds the resilient basket (17).

22. Rod-actuated switch according to one of claims 1 to 21, characterised in that the socket (22) comprises an upper socket portion (23) and a lower socket portion (24).

23. Rod-actuated switch according to one of claims 1 to 22, characterised in that the switching member (45) is provided on the resilient basket (17) and protrudes laterally through a notch (44), which is provided in the housing (1) or in the socket (22), into the electrical switch (38) disposed on the housing (1).

24. Rod-actuated switch according to one of claims 1 to 23, characterised in that the switching member (45) is configured as inclined ramp (46) and can be brought into engagement with the contact unit (41) of the electrical switch (38).

25. Rod-actuated switch according to one of claims 1 to 24, characterised in that the retaining element (30) is configured as retaining plate (29), which is mountable on the automotive vehicle so as to be integral with the frame.

26. Rod-actuated switch according to one of claims 1 to 25, characterised in that the retaining plate (29) is provided with an opening (48) for the rod (5) to pass therethrough and for the projections (31-34), which are provided on the housing (1) and on the socket (22), to pass therethrough.

## Revendications

1. Contacteur à poussoir, notamment contacteur des feux de stop d'un véhicule à moteur, du type comportant un boîtier (1) pouvant être fixé à un élément de maintien (30), dans lequel est guidé un poussoir (5) présentent une denture d'accrochage auto-ajustable (4), un coulisseau (7) soumis à un ressort et présentent une denture d'accrochage (10) coopérant avec celle du poussoir (5), et un organe commutateur (45) déplaçable sous l'action du poussoir (5) et pouvant être amené en prise avec une unité de contact d'un contacteur électrique (38),
**caractérisé en ce que**
- une douille (22) disposée dans le boîtier (1) est rotative en vue de la fixation du boîtier (1) vis à vis de l'élément de maintien (30),
- sur la denture d'accrochage (10) du coulisseau (7) sont pratiqués plusieurs évidements (9),
- un élément de pression (13) formé sur le boîtier (1) peut être amené contre la denture d'accrochage (10) du coulisseau (7), et
- le coulisseau (7) soumis à un ressort est en butée contre un élément de réception (18) soumis à un ressort et guidé dans le boîtier (1).

2. Contacteur à poussoir selon la revendication 1, caractérisé en ce que la douille (22) peut être tournée et arrêtée vis à vis du boîtier (1) au moyen d'un système à baïonnette (35) lors de la fixation simultanée du contacteur à poussoir sur l'élément de maintien (30).

3. Contacteur à poussoir selon la revendication 1 ou 2, caractérisé en ce que le système à baïonnette (35) se compose d'au moins un doigt de guidage (37) formé sur la douille (22) et d'une fente de guidage (36) correspondante formée sur le boîtier (1).

4. Contacteur à poussoir selon l'une des revendications 1 à 3, caractérisé en ce que le boîtier (1) peut être tourné à la douille (22) au moyen du système à baïonnette (35) d'un angle compris entre environ 30° et 45°.

5. Contacteur à poussoir selon l'une des revendications 1 à 4, caractérisé en ce que sur chacune des faces supérieures (2) du boîtier (1) et de la douille (22) sont formés deux doigts opposés (31-34), de telle sorte que, dans la position du contacteur à poussoir où il n'est pas fixé à l'élément de maintien (30), chacun de deux doigts (31, 33) sur un côté et de deux doigts (32, 34) sur le côté opposé du boîtier (1) et de la douille (22) reposent l'un sur l'autre en se recouvrant.

6. Contacteur à poussoir selon l'une des revendications 1 à 5, caractérisé en ce que chacun des deux doigts (31, 33) sur un côté et des deux doigts (32, 34) sur le côté opposé du boîtier (1) et de la douille (22) présentent des formes géométriques différentes.

7. Contacteur à poussoir selon l'une des revendications 1 à 6, caractérisé en ce que la douille (22) entoure le coulisseau (7) et la denture d'accrochage (4) du poussoir (5) s'étendant dans le boîtier (1).

8. Contacteur à poussoir selon l'une des revendications 1 à 7, caractérisé en ce que les évidements (9) pratiqués dans la denture d'accrochage (10) du coulisseau (7) s'étendent dans la direction d'enfoncement du poussoir (5).

9. Contacteur à poussoir selon l'une des revendications 1 à 8, caractérisé en ce que les évidements (9) sont pratiqués en forme de croix dans la denture d'accrochage (10) du coulisseau (7).

10. Contacteur à poussoir selon l'une des revendications 1 à 9, caractérisé en ce que le coulisseau (7) a la forme d'un manchon sous pression, de telle sorte que les bras élastiques (8) formés à l'intérieur et présentant la denture d'accrochage (10) s'étendent dans l'espace vide du manchon sous pression (6).

11. Contacteur à poussoir selon l'une des revendications 1 à 10, caractérisé en ce que l'élément de pression (13) formé sur le boîtier (1) présente un trou borgne (14) arrondi, qui entoure les bras élastiques (8) du manchon sous pression (6) et dont la paroi périphérique présente des saillies radiales (15), lesquelles appuient radialement le boîtier (1) fixé à l'élément de maintien (30) contre les bras élastiques (8) du manchon sous pression (6).

12. Contacteur à poussoir selon l'une des revendications 1 à 11, caractérisé en ce que les dents de la denture d'accrochage (4) du poussoir (5) sont formées tout autour.

13. Contacteur à poussoir selon l'une des revendications 1 à 12, caractérisé en ce que le nombre de dents de la denture (4) du poussoir (5) est plus grand que le nombre de dents de la denture d'accrochage (10) du manchon sous pression (6).

14. Contacteur à poussoir selon l'une des revendications 1 à 13, caractérisé en ce que l'angle formé par les flancs de chaque dent de la denture d'accrochage (4, 10) du poussoir (5) et du manchon sous pression (6) est de 90°, de sorte que l'angle des flancs de la portion arrière du poussoir (5) en direction d'enfoncement soit plus petit que l'angle des flancs de la portion avant.

15. Contacteur à poussoir selon l'une des revendications 1 à 14, caractérisé en ce que la portion de réception (18) a la forme d'un godet pour ressort (17) dans lequel repose un ressort de compression (12), qui entoure le manchon sous pression (6), et prend appui, d'une part sur la portion de réception (18), et d'autre part sur le godet pour ressort (17).

16. Contacteur à poussoir selon l'une des revendications 1 à 15, caractérisé en ce que, dans le fond (16) du godet pour ressort (17), est pratiquée une ouverture de traversée (19) pour le poussoir (5).

17. Contacteur à poussoir selon l'une des revendications 1 à 16, caractérisé en ce que le rebord supérieur du godet pour ressort (17) présente une portion angulaire dirigée vers l'intérieur (20) qui peut venir contre un épaulement interne (27) formé sur le rebord supérieur de la douille (22).

18. Contacteur à poussoir selon l'une des revendications 1 à 17, caractérisé en ce que le rebord supérieur du manchon sous pression (6) présente une collerette extérieure (11) qui peut reposer sur la portion angulaire (20) du godet pour ressort (17).

19. Contacteur à poussoir selon l'une des revendications 1 à 18, caractérisé en ce que le godet pour ressort (17) présente périphériquement une bague d'appui (21) qui s'appuie contre la douille (22).

20. Contacteur à poussoir selon l'une des revendications 1 à 19, caractérisé en ce que, dans la douille (22) est disposé un ressort de compression (26), qui entoure partiellement le godet pour ressort (17) et qui prend appui, d'une part sur le fond (25) de la douille, et d'autre part sur la bague d'appui (21) du godet pour ressort (17).

21. Contacteur à poussoir selon l'une des revendications 1 à 20, caractérisé en ce que le ressort de compression (12) disposé à l'intérieur du godet pour ressort (17) présente une force élastique plus petite que le ressort de compression (26) reçu dans la douille (22) et entourant le godet pour ressort (17).

22. Contacteur à poussoir selon l'une des revendications 1 à 21, caractérisé en ce que la douille (22) se compose d'une portion supérieure de douille (23) et d'une portion inférieure de douille (24).

23. Contacteur à poussoir selon l'une des revendications 1 à 22, caractérisé en ce que l'organe de commutation (45) est formé sur le godet pour ressort (17) et, par un évidement (44) pratiqué dans le boîtier (1) et la douille (22), dépasse latéralement dans le contacteur électrique (38) monté sur le boîtier (1).

24. Contacteur à poussoir selon l'une des revendications 1 à 23, caractérisé en ce que l'organe de commutation (45) a la forme d'une rampe oblique (46) et peut être amené en prise avec l'unité de contact (41) du contacteur électrique (38).

25. Contacteur à poussoir selon l'une des revendications 1 à 24, caractérisé en ce que l'élément de maintien (30) est constitué par une plaque de montage (29) pouvant être montée fixe sur un véhicule à moteur.

26. Contacteur à poussoir selon l'une des revendications 1 à 25, caractérisé en ce que la plaque de montage (29) est prévue avec une ouverture pour le passage du poussoir (5) et des doigts (31-34) formés sur le boîtier (1) et la douille (22).
